# EUROPÄISCHE PATENTANMELDUNG

(11) **EP 4 417 449 A1**
(43) Veröffentlichungstag der Anmeldung: **21.08.2024**
(21) Anmeldenummer: 24020048.5
(22) Anmeldetag: 02.02.2024
(51) Int. Cl.: B60J 10/16, B60J 10/22, B60J 10/76

(54) **DICHTUNGSPROFIL FÜR EIN KRAFTFAHRZEUG, DICHTUNGSANORDNUNG UND VERFAHREN ZUR HERSTELLUNG EINES DICHTUNGSPROFILS**

(30) Priorität: 16.02.2023 DE 102023103888
(71) Anmelder: CQLT SaarGummi Technologies S.à.r.l., 5544 Remich (LU)
(72) Erfinder: Laux, Timo, 66793 Saarwellingen (DE); Schaly, Udo, 66620 Nonnweiler-Braunshausen (DE)
(74) Vertreter: Patentanwälte Bernhardt / Wolff Partnerschaft mbB

(57) **Zusammenfassung**

Die Erfindung betrifft ein Dichtungsprofil (1) für ein Kraftfahrzeug, insbesondere zur Abdichtung einer Fahrzeugscheibe gegenüber einer Fahrzeugtür, mit einem Befestigungsabschnitt (5) zur Befestigung des Dichtungsprofils (1) an einer Karosserie oder an einem Anbauteil (10) des Kraftfahrzeugs und einem Dichtungsabschnitt (3) zur Abdichtung der Karosserie oder des Anbauteils (10) gegenüber einem angrenzenden Bauteil. Damit das Dichtungsprofil (1) neben der Abdichtung angrenzender Bauteile weitere Funktionen erfüllen kann und dabei einfach herstellbar ist, ist an dem Befestigungsabschnitt (5) mindestens ein Dichtungselement (8a) vorgesehen, welches eine geringere Dichte und/oder höhere Kompressibilität als das angrenzende Material des Befestigungsabschnitts (5) aufweist.

## Beschreibung

Die Erfindung betrifft ein Dichtungsprofil für ein Kraftfahrzeug, insbesondere zur Abdichtung einer Fahrzeugscheibe gegenüber einer Fahrzeugtür, nach dem Oberbegriff des Anspruchs 1 sowie eine Dichtungsanordnung und ein Verfahren zur Herstellung eines Dichtungsprofils.

Durch Benutzung sind Dichtungsprofile für Kraftfahrzeuge beispielsweise zur Abdichtung einer Fahrzeugscheibe gegenüber einem Anbauteil wie einer Fahrzeugtür oder zur Abdichtung der Fahrzeugkarosserie gegenüber einem Anbauteil wie einem Kofferraumdeckel bekannt und umfassen einen Befestigungsabschnitt zur Befestigung des Dichtungsprofils an der Fahrzeugkarosserie oder dem Anbauteil sowie einen Dichtungsabschnitt zur Abdichtung der Karosserie oder des Anbauteils gegenüber einem angrenzenden Bauteil.

Aufgabe der Erfindung ist es, ein Dichtungsprofil zu ermöglichen, welches zusätzlich zur Abdichtung angrenzender Bauteile weitere Funktionen erfüllt und dabei einfach herstellbar ist.

Diese Aufgabe wird dadurch gelöst, dass an dem Befestigungsabschnitt des Dichtungsprofils mindestens ein Dichtungselement vorgesehen ist, welches eine geringere Dichte und/oder höhere Kompressibilität als das angrenzende Material des Befestigungsabschnitts aufweist. Durch das Dichtungselement können besonders einfach Durchgangslöcher und/oder Vertiefungen in dem Abschnitt der Karosserie oder des Anbauteils des Kraftfahrzeugs abgedichtet werden, an welchem der Befestigungsabschnitt des Dichtungsprofils anliegt.

Vorteilhaft können an dem Befestigungsabschnitt des Dichtungsprofils mehrere voneinander beabstandete Dichtungselemente vorgesehen sein, welche jeweils eine geringere Dichte und/oder höhere Kompressibilität als das angrenzende Material des Befestigungsabschnitts aufweisen. Hierdurch können mit einem einzigen Dichtungsprofil gleichzeitig mehrere Durchgangslöcher und/oder Vertiefungen in dem Abschnitt der Karosserie oder des Anbauteils des Kraftfahrzeugs abgedichtet werden, an welchem der Befestigungsabschnitt anliegt.

Alternativ kann an dem Befestigungsabschnitt des Dichtungsprofils ein sich zumindest abschnittsweise in Längsrichtung des Dichtungsprofils erstreckendes einzelnes Dichtungselement vorgesehen sein, welche jeweils eine geringere Dichte und/oder höhere Kompressibilität als das angrenzende Material des Befestigungsabschnitts aufweist. Mit einem derartigen einfach herstellbaren Dichtungselement können gleichzeitig mehrere Durchgangslöcher und/oder Vertiefungen in dem Abschnitt der Karosserie oder des Anbauteils des Kraftfahrzeugs abgedichtet werden, an welchem der Befestigungsabschnitt anliegt.

In einer vorteilhaften Ausführungsform kann jedes Dichtungselement von dem Befestigungsabschnitt zumindest teilweise vorstehen. Hierdurch wird gewährleistet, dass jedes Dichtungselement vollflächig an einer Vertiefung oder einem Durchgangsloch in der Karosserie bzw. in dem Anbauteil anliegt, was eine sichere Abdichtung ermöglicht. Zudem kann das Dichtungselement auch in das entsprechende Durchgangsloch vorstehen.

In einer besonders vorteilhaften Ausführungsform kann das Dichtungsprofil zumindest abschnittsweise in einer Längsrichtung einen konstanten Querschnitt aufweisen, beispielsweise wenn das Dichtungsprofil zumindest abschnittsweise durch Extrusion gebildet ist, wobei die Dichtungselemente in Längsrichtung voneinander beabstandet sind. Durch ein derartiges, beispielsweise als Extrusionsprofil ausgebildetes Dichtungsprofil können mehrere Vertiefungen und/oder Durchgangslöcher in einer Karosserie oder in einem Anbauteil wie einer Fahrzeugtür mit dem Dichtungsprofil abgedichtet/verschlossen werden. Die einzelnen Dichtungselemente können dabei in Längsrichtung ebenfalls einen konstanten Querschnitt aufweisen und durch Koextrusion gebildet sein.

Der Befestigungsabschnitt des Dichtungsprofils kann vorzugsweise eine insbesondere U-förmige Befestigungsnut zur Aufnahme eines Stegs/Flansches einer Karosserie oder eines Anbauteil eines Kraftfahrzeugs aufweisen, wobei die Dichtungselemente vorzugsweise zumindest teilweise in Richtung der Öffnung der Befestigungsnut von dem Befestigungsabschnitt vorstehen. Hierdurch wird ein sicheres Andrücken der Dichtungselemente an die Karosserie bzw. an das Anbauteil beim Aufstecken der Befestigungsnut auf einen korrespondierenden Steg/Flansch einer Karosserie oder eines Anbauteils ermöglicht.

Jedes Dichtungselement kann dabei an einer zur Anlage an einer Fahrzeugkarosserie oder einem Anbauteil eines Kraftfahrzeugs ausgebildeten Anlagefläche des Befestigungsabschnitts angeordnet sein, insbesondere benachbart zu einer Befestigungsnut des Befestigungsabschnitts. Eine derartige Anlagefläche erstreckt sich abgesehen von eventuell vorhandenen Dichtungslippe/-vorsprüngen üblicherweise eben und angrenzend zu der Befestigungsnut und ermöglicht damit eine großflächige Anlage des Befestigungsabschnitts an der Karosserie oder dem Anbauteil.

Besonders vorteilhaft können die Dichtungselemente angrenzend zu einer Anlagelippe, insbesondere zwischen zwei Anlagelippen, angeordnet sein, wobei sich die Anlagelippe bzw. die Anlagelippen vorzugsweise in einer Längsrichtung des Dichtungsprofils erstreckt/erstrecken. Das einzelne Dichtungselement oder die mehreren Dichtungselemente können dabei im Querschnitt einen Hohlraum beispielsweise zwischen den Anlagelippen insbesondere in einem Bereich in Längsrichtung, in welchem kein Loch oder keine Vertiefung vorgesehen ist, ausfüllen, um einen Durchgang von Schall und/oder Verschmutzung zu verhindern.

Des Weiteren wird auch eine Dichtungsanordnung beansprucht, welche ein Dichtungsprofil sowie eine Karosserie oder ein Anbauteil eines Kraftfahrzeugs umfasst, wobei in einer Wand der Karosserie oder des Anbauteils mindestens ein Durchgangsloch, insbesondere ein Durchgangsloch für eine kathodische Tauchlackierung, oder eine Vertiefung vorgesehen ist und das Dichtungsprofil wie zuvor beschrieben ausgebildet ist, wobei das mindestens eine Dichtungselement unmittelbar an dem Durchgangsloch oder der Vertiefung anliegt und damit direkt verschließt bzw. abdichtet oder das mindestens eine Dichtungselement einen an das Durchgangsloch oder die Vertiefung angrenzenden Hohlraum begrenzt und damit indirekt auch das Durchgangsloch oder die Vertiefung verschließt bzw. abdichtet.

Vorzugsweise können in der Wand der Karosserie oder des Anbauteils mehrere Durchgangslöcher und/oder Vertiefungen, insbesondere Durchgangslöcher für eine kathodische Tauchlackierung, vorgesehen sein, wobei die Durchgangslöcher und/ oder Vertiefungen durch das Dichtungselement oder die Dichtungselemente des Dichtungsprofils verschlossen bzw. abgedichtet sind.

In einer weiteren bevorzugten Ausführungsform kann es sich bei dem Anbauteil um eine Kraftfahrzeugtür handeln, wobei die Durchgangslöcher vorzugsweise in einem Rahmenteil für die Fahrzeugscheibe, insbesondere in einem oberen Rahmenteil, angeordnet sind.

Der Dichtungsabschnitt des Dichtungsprofils kann mindestens eine Dichtungslippe zur Anlage an einer Fahrzeugscheibe aufweisen. Zudem kann das Dichtungsprofil mit dem Befestigungsabschnitt auf einen Steg/Flansch an der Wand der Karosserie oder des Anbauteils aufgesteckt sein, wodurch eine sichere Befestigung des Dichtungsprofils und ein ausreichendes Andrücken der Dichtungselemente gewährleistet wird. Um die Haltekraft zu erhöhen, kann auch vorgesehen sein, dass die Befestigungsnut des Befestigungsabschnitts in bekannter Weise durch eine Einlage aus einem härteren Material wie beispielsweise Metall, insbesondere mit einem U-förmigen Querschnitt, verstärkt ist.

Das mindestens eine Dichtungselement kann dabei angrenzend zu einer sich in Längsrichtung des Dichtungsprofils erstreckenden Dichtungslippe, vorzugsweise aber zwischen zwei sich in Längsrichtung des Dichtungsprofils erstreckenden Dichtungslippen, angeordnet sein und einen den Hohlraum zwischen den Dichtungslippen begrenzen bzw. abdichten. Hierdurch wird ein Durchgang von Schall oder Verschmutzungen in Längsrichtung des Dichtungsprofils verhindert. Die Dichtungslippen sind zur Anlage an einer Wand einer Karosserie oder eines Anbauteils vorgesehen und bilden einen Teil des Befestigungsabschnitts.

Des Weiteren wird auch ein Verfahren zur Herstellung eines Dichtungsprofils beansprucht, wobei das Dichtungsprofil wie beschrieben ausgestaltet ist und durch Extrusion gebildet wird. Die vorzugsweise in Extrusionsrichtung voneinander beabstandeten Dichtungselemente können dabei durch variable Extrusion, also eine zeitliche Veränderung des Querschnitts der Extrusionsdüse, oder durch zeitlich begrenzte Coextrusion mit dem Befestigungsabschnitt bzw. Anextrusion an den übrigen Befestigungsabschnitt gebildet werden. Wird ein einzelnes Dichtungselement vorgesehen, welches sich ggf. über mehrere Durchgangslöcher bzw. Vertiefungen erstreckt, kann das Dichtungselement auch durch übliche Koextrusion gebildet sein und sich beispielsweise über die gesamte Länge des ebenfalls durch Extrusion gebildeten Abschnitts des Dichtungsprofils erstrecken.

Bei dem Dichtungselement bzw. den Dichtungselementen kann es sich vorzugsweise um ein nicht klebriges und/oder geschäumtes Kunststoffteil bzw. einen Schaumstoff handeln, welcher beispielsweise aus Synthesekautschuk wie EPDM oder einem thermoplastischen Elastomer gebildet ist. Der Befestigungsabschnitt, insbesondere in einem Bereich angrenzend an das Dichtungselement bzw. die Dichtungselemente, kann ebenfalls aus einem Synthesekautschuk wie EPDM oder einem thermoplastischen Elastomer gebildet sein.

Weitere Besonderheiten und Vorzüge der Erfindung ergeben sich aus der folgenden Beschreibung eines bevorzugten Ausführungsbeispiels anhand der Zeichnung. Es zeigen:
- Fig. 1: eine perspektivische Darstellung eines Teils eines Dichtungsprofils mit zwei Dichtungselementen;
- Fig. 2: eine Seitenansicht auf einen Fensterrahmen mit Durchgangslöchern und
- Fig. 3: einen Querschnitt durch das Dichtungsprofil von Figur 1 befestigt an dem Fensterrahmen von Figur 2.

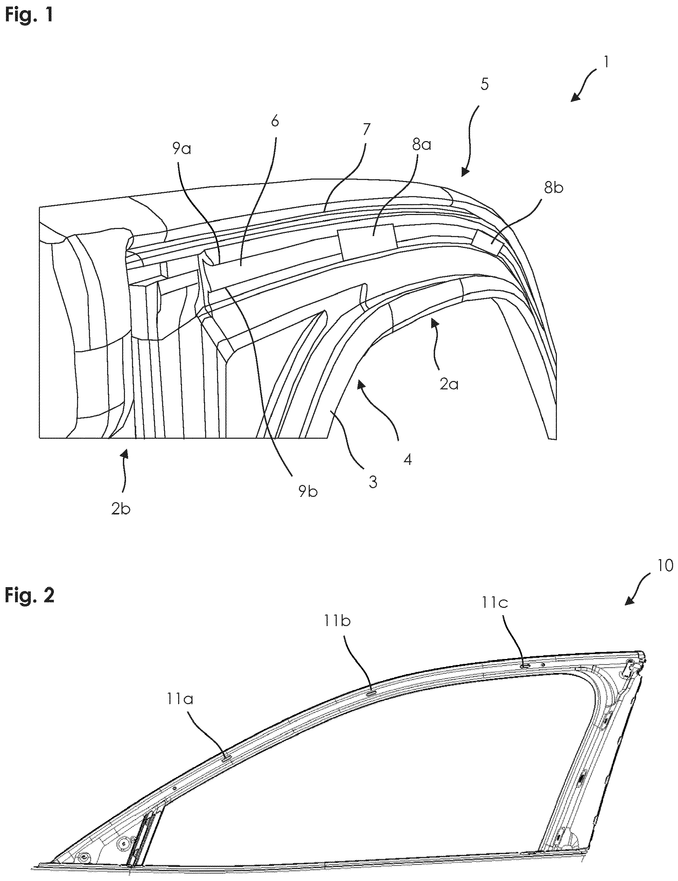

In Figur 1 ist perspektivisch ein Teil eines Dichtungsprofils 1 für eine nicht gezeigte Fahrzeugtür dargestellt. Das Dichtungsprofil 1 umfasst einen Abschnitt 2a mit in Längsrichtung konstantem Querschnitt, an welchen sich ein Eckenabschnitt 2b anschließt. Der Abschnitt 2a kann beispielsweise mittels Extrusion hergestellt werden und der Abschnitt 2b kann anschließend an den Abschnitt 2a angespritzt werden. Das gezeigte Dichtungsprofil 1 ist dazu ausgebildet, an dem oberen Abschnitt eines Fensterrahmens einer Fahrzeugtür befestigt zu werden. Um eine bewegliche Fahrzeug- bzw. Fensterscheibe in der oberen Position sicher aufzunehmen und gegenüber der Fahrzeugtür zuverlässig abzudichten, weist das Dichtungsprofil 1 einen Dichtungsabschnitt 3 auf, welcher auf einer nicht gezeigten Rückseite eine in bekannter Weise ausgebildete Nut zur Aufnahme der Fahrzeugscheibe mit mehreren Dichtungslippen zur Anlage an der Fahrzeugscheibe sowie die hier gezeigte Dichtungslippe 4 umfasst, wobei die Dichtungslippe 4 ausgebildet ist, den oberen Rahmenteil der Fahrzeugtür innen zu hintergreifen. Auf der gezeigten, der Fahrzeugtür zugewandten Seite umfasst das Dichtungsprofil 1 einen Befestigungsabschnitt 5 mit einer ebenen Anlagefläche 6 zur großflächigen Anlage an dem oberen Fensterrahmen der Fahrzeugtür und angrenzend hieran eine Befestigungsnut 7, welche sich wie die Anlagefläche 6 in Längsrichtung des Abschnitts 2a des Dichtungsprofils 1 erstreckt.

Um in dem oberen Rahmenteil einer Fahrzeugtür angeordnete Durchgangslöcher, insbesondere Durchgangslöcher für eine kathodische Tauchlackierung, zuverlässig abzudichten und einen Durchtritt von Schall oder Verschmutzung zu verhindern, umfasst der Befestigungsabschnitt 5 mehrere in Längsrichtung des Abschnitts 2a voneinander beabstandete Dichtungselemente 8a, 8b, welche eine geringere Dichte und/oder höhere Kompressibilität als das angrenzende Material des Befestigungsabschnitts 5 aufweisen. Die Dichtungselemente 8a, 8b sind relativ zueinander und zu der Befestigungsnut 7 derart angeordnet, dass bei einer Montage des Dichtungsprofils 1 an dem Fensterrahmen die Durchgangslöcher durch die Dichtungselemente 8a, 8b des Dichtungsprofils 1 verschlossen bzw. abgedichtet werden. Zur sicheren Befestigung des Dichtungsprofils 1 an dem Fensterrahmen kann der Fensterrahmen an einer (Außen-) Wand einen Steg bzw. einen Flansch aufweisen, auf welchen die Befestigungsnut 7 aufgesteckt ist.

Wie aus Figur 1 weiter zu entnehmen ist, sind die Dichtungselemente 8a, 8b auf der ebenen Anlagefläche 6 angeordnet, welche an die Befestigungsnut 7 angrenzt und lediglich von Anlagelippen 9a, 9b unterbrochen wird. Die Dichtungselemente 8a, 8b sind dabei vorzugsweise zwischen den Anlagelippen 9a, 9b, welche sich ebenfalls in Längsrichtung des Abschnitts 2a erstrecken, angeordnet. Um die Durchgangslöcher in einem Fensterrahmen zuverlässig zu verschließen, stehen die Dichtungselemente 8a, 8b von dem Befestigungsabschnitt 5 vor. Konkret ist vorgesehen, dass die Dichtungselemente 8a, 8b in Richtung der Öffnung der Befestigungsnut 7 von dem Befestigungsabschnitt 5 vorstehen. Hierdurch wird gewährleistet, dass über die Haltekraft der Befestigungsnut 7 auch die Dichtungselemente 8a, 8b zuverlässig an den Fensterrahmen angedrückt werden. In der perspektivischen Darstellung von Figur 1 ist die Öffnungsrichtung der Befestigungsnut 7 aus der Bildebene heraus nach rechts orientiert.

Figur 2 ist eine Seitenansicht auf einen Fensterrahmen 10 einer Fahrzeugtür im Rohbau gezeigt. Wie dort zu entnehmen ist, sind im oberen Rahmenabschnitt mehrere Durchgangslöcher 11a, 11b, 11c vorgesehen, welche sich durch die äußere, aus einem Blech gebildete Wand des Fensterrahmens 10 hindurch erstrecken und somit einen Durchtritt insbesondere von Flüssigkeit bei der kathodischen Tauchlackierung in einen durch mehrere Bleche begrenzten Innenraum des Fensterrahmens 10 ermöglichen.

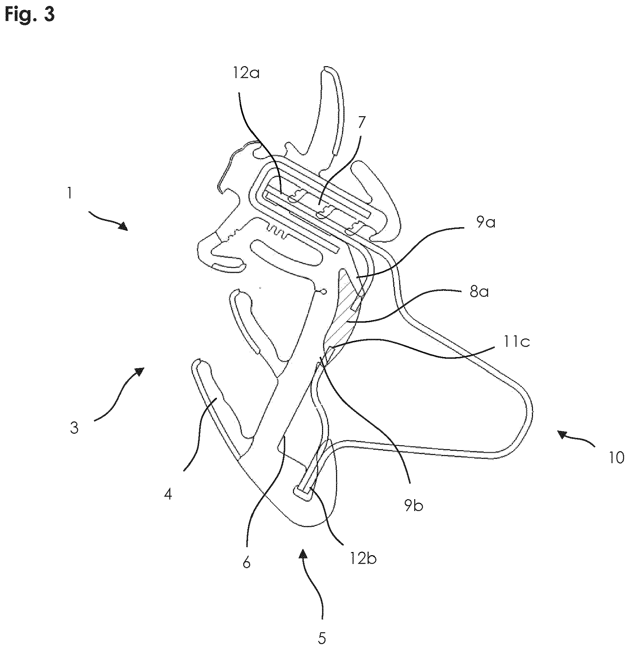

In Figur 3 ist ein Querschnitt durch das Dichtungsprofil 1 von Figur 1 befestigt an dem Fensterrahmen 10 von Figur 2 gezeigt. Das Dichtungsprofil 1 ist mit dem Befestigungsabschnitt 5 dem Fensterrahmen 10 zugewandt, wobei in die Befestigungsnut 7 ein erster Flansch 12a des Fensterrahmens 10 kraftschlüssig haltend vorsteht und ein zweiter Flansch 12b des Fensterrahmens 10 von einer nicht bezifferten Haltelippe des Befestigungsabschnitts 5 formschlüssig haltend umgriffen wird.

Der Querschnitt von Figur 3 ist auf Höhe des in Figur 2 dargestellten Durchgangslochs 11c des Fensterrahmens 10 angeordnet. Wie gezeigt, liegt nach der Montage des Dichtungsprofils 1 das hierzu korrespondierende Dichtungselement 8a an dem Durchgangsloch 11c an und steht in dieses vor, wodurch das Durchgangsloch 11c zuverlässig abgedichtet wird. Wie weiter zu erkennen ist, liegen auch die Anlagelippen 9a, 9b an dem Fensterrahmen 10 dichtend an, wobei das Dichtungselement 8a den Hohlraum zwischen den Anlagelippen 9a, 9b ausfüllt.

In einer nicht gezeigten Ausführungsform kann das mindestens eine Dichtungselement auch in Längsrichtung des Dichtungsprofils 1 versetzt zu einem Durchgangsloch oder einer Vertiefung des Fensterrahmens 10 angeordnet sein und damit das Durchgangsloch bzw. die Vertiefung nicht direkt verschließen. Das Dichtungselement verschließt dann jedoch einen Hohlraum zwischen den Anlagelippen 9a, 9b und dem angrenzenden Fensterrahmen 10, so dass indirekt auch das Durchgangsloch bzw. die Vertiefung verschlossen und ein Durchtritt von Schall oder Verschmutzung in Längsrichtung des Dichtungsprofils 1 aus der Umgebung in das Durchgangsloch verhindert wird.

### Bezugszeichenliste:

- 1: Dichtungsprofil
- 2a, 2b: Abschnitte des Dichtungsprofils
- 3: Dichtungsabschnitt
- 4: Dichtungslippe
- 5: Befestigungsabschnitt
- 6: Anlagefläche
- 7: Befestigungsnut
- 8a, 8b: Dichtungselemente
- 9a, 9b: Anlagelippen
- 10: Fensterrahmen
- 11a, 11b, 11c: Durchgangslöcher
- 12a, 12b: Flansch

## Patentansprüche

1. Dichtungsprofil (1) für ein Kraftfahrzeug, insbesondere zur Abdichtung einer Fahrzeugscheibe gegenüber einer Fahrzeugtür, mit einem Befestigungsabschnitt (5) zur Befestigung des Dichtungsprofils (1) an einer Karosserie oder an einem Anbauteil (10) des Kraftfahrzeugs und einem Dichtungsabschnitt (3) zur Abdichtung der Karosserie oder des Anbauteils (10) gegenüber einem angrenzenden Bauteil,
**dadurch gekennzeichnet,**
**dass** an dem Befestigungsabschnitt (5) mindestens ein Dichtungselement (8a; 8b) vorgesehen ist, welches eine geringere Dichte und/oder höhere Kompressibilität als das angrenzende Material des Befestigungsabschnitts (5) aufweist.

2. Dichtungsprofil (1) nach Anspruch 1,
**dadurch gekennzeichnet,**
**dass** an dem Befestigungsabschnitt (5) mehrere voneinander beabstandete Dichtungselemente (8a; 8b) vorgesehen sind, welche eine geringere Dichte und/oder höhere Kompressibilität als das angrenzende Material des Befestigungsabschnitts (5) aufweisen.

3. Dichtungsprofil (1) nach Anspruch 1 oder 2,
**dadurch gekennzeichnet,**
**dass** das mindestens eine Dichtungselement (8a; 8b) von dem Befestigungsabschnitt (5) vorsteht.

4. Dichtungsprofil (1) nach einem der Ansprüche 1 bis 3,
**dadurch gekennzeichnet,**
**dass** das Dichtungsprofil (1) zumindest abschnittsweise in einer Längsrichtung einen konstanten Querschnitt aufweist und die Dichtungselemente (8a; 8b) in Längsrichtung voneinander beabstandet sind.

5. Dichtungsprofil (1) nach einem der Ansprüche 1 bis 4,
**dadurch gekennzeichnet,**
**dass** der Befestigungsabschnitt (5) eine insbesondere U-förmige Befestigungsnut (7) zur Aufnahme eines Stegs/Flansches (12a) an einer Karosserie oder einem Anbauteil (10) eines Kraftfahrzeugs aufweist und die Dichtungselemente (8a; 8b) in der Richtung der Öffnung der Befestigungsnut (7) von dem Befestigungsabschnitt (5) vorstehen.

6. Dichtungsprofil (1) nach einem der Ansprüche 1 bis 5,
**dadurch gekennzeichnet,**
**dass** das mindestens eine Dichtungselement (8a; 8b) an einer zur Anlage an einer Fahrzeugkarosserie oder einem Anbauteil (10) eines Kraftfahrzeugs ausgebildeten Anlagefläche (6) des Befestigungsabschnitts (5) angeordnet ist.

7. Dichtungsprofil (1) nach einem der Ansprüche 1 bis 6,
**dadurch gekennzeichnet,**
**dass** das mindestens eine Dichtungselement (8a; 8b) angrenzend zu einer Anlagelippe, insbesondere zwischen zwei Anlagelippen (9a; 9b), angeordnet ist.

8. Dichtungsanordnung umfassend ein Dichtungsprofil und eine Karosserie oder ein Anbauteil (10) eines Kraftfahrzeugs, wobei in einer Wand der Karosserie oder des Anbauteils (10) mindestens ein Durchgangsloch, insbesondere ein Durchgangsloch (1 1a; 11b; 11c) für eine kathodische Tauchlackierung, oder mindestens eine Vertiefung vorgesehen ist,
**dadurch gekennzeichnet,**
**dass** das Dichtungsprofil (1) nach einem der Ansprüche 1 bis 7 ausgebildet ist und das mindestens eine Durchgangsloch (11a; 11b; 11c) oder die mindestens eine Vertiefung durch ein Dichtungselement (8a; 8b) des Dichtungsprofils (1) verschlossen bzw. abgedichtet ist.

9. Dichtungsanordnung nach Anspruch 8,
**dadurch gekennzeichnet,**
**dass** in einer Wand der Karosserie oder des Anbauteils (10) mehrere Durchgangslöcher (11a; 11b; 11c) und/oder Vertiefungen, insbesondere Durchgangslöcher für eine kathodische Tauchlackierung, vorgesehen sind und die Durchgangslöcher (1 1a; 11b; 11c) und/oder Vertiefungen durch das Dichtungselement oder die Dichtungselemente (8a; 8b) des Dichtungsprofils (1) verschlossen bzw. abgedichtet sind.

10. Dichtungsanordnung nach Anspruch 8 oder 9,
**dadurch gekennzeichnet,**
**dass** es sich bei dem Anbauteil um eine Kraftfahrzeugtür handelt, wobei die Durchgangslöcher (11a; 11b; 11c) vorzugsweise in einem Rahmenteil (10) für die Fahrzeugscheibe angeordnet sind.

11. Dichtungsanordnung nach einem der Ansprüche 8 bis 10,
**dadurch gekennzeichnet,**
**dass** der Dichtungsabschnitt (3) des Dichtungsprofils (1) Dichtungslippen (4) zur Anlage an einer Fahrzeugscheibe aufweist.

12. Dichtungsanordnung nach einem der Ansprüche 8 bis 11,
**dadurch gekennzeichnet,**
**dass** das Dichtungsprofil (1) mit dem Befestigungsabschnitt (5) auf einen Steg/Flansch (12a) an einer Wand der Karosserie oder des Anbauteils (10) aufgesteckt ist.

13. Verfahren zur Herstellung eines Dichtungsprofils,
**dadurch gekennzeichnet,**
**dass** das Dichtungsprofil (1) nach einem der Ansprüche 1 bis 7 ausgebildet ist und durch Extrusion gebildet wird.
